# FASCICULE DE BREVET EUROPEEN

(11) **EP 1 399 878 B1**
(45) Date de publication et mention de la délivrance du brevet: **27.09.2006**
(21) Numéro de dépôt: 02758196.6
(22) Date de dépôt: 14.05.2002
(51) Int. Cl.: G06K 19/07, G06K 7/00, G06C 9/00

(54) **SYSTEME ET PROCEDE DE DETECTION D'INDIVIDUS OU D'OBJETS DANS LES ESPACES DELIMITES PRESENTANT CHACUN AU MOINS UNE ENTREE**
SYSTEM UND VERFAHREN ZUR ERKENNUNG VON PERSONEN ODER OBJEKTEN IN DEFINITIVEN BEREICHEN, DIE JEWEILS MIT MINDESTENS EINEM EINGANG VERSEHEN SIND
SYSTEM AND METHOD FOR DETECTING PERSONS OR OBJECTS IN DEFINITE AREAS PROVIDED EACH WITH AT LEAST AN ENTRANCE

(30) Priorité: 14.05.2001 EP 01201768
(43) Date de publication de la demande: 24.03.2004
(73) Titulaire: EM Microelectronic-Marin SA, 2074 Marin (CH)
(72) Inventeur: DESJEUX, Olivier, CH-2525 Le Landeron (CH)
(74) Mandataire: Ravenel, Thierry Gérard Louis
(86) Numéro de dépôt international: PCT/EP2002/005328
(87) Numéro de publication internationale: WO 2003/003290

(56) Documents cités:
- WO-A-00/67208
- WO-A-01/03057
- WO-A-92/08148
- FR-A- 2 664 075
- US-A- 5 708 423

## Description

L'invention concerne la détection d'individus ou d'objets dans des espaces délimités présentant chacun au moins une entrée. Par entrée, il faut comprendre de manière large toute porte ou chemin de passage donnant accès à l'espace délimité en question. A titre d'exemple, il est prévu de détecter la présence d'individus lors d'un trajet dans un transport public ou lors d'un événement sportif ou culturel ayant lieu dans un endroit délimité.

Dans le cadre de la présente invention, il est prévu de détecter la présence d'individus ou d'objets au moyen de cartes ou d'unités électroniques portables ayant des moyens pour recevoir et émettre des données sous la forme de signaux électromagnétiques. Il est prévu de munir les individus ou objets de telles unités électroniques portables.

Le document WO 00/67208 A1 décrit effectivement un système selon le préambule de la revendication 1. Dans ce document les unités électroniques (tags) présentent plusieurs modes de fonctionnement, à savoir un premier mode dit de veille dans lequel le tag est à l'écoute d'un champ radiant basse fréquence, et un second mode dans lequel le tag est actif et peut émettre et recevoir des données à haute fréquence. Le passage d'un mode à l'autre est réalisé par l'envoi d'une trame de commande spécifique par le lecteur, aussi bien en basse fréquence qu'en haute fréquence.

Le document WO 92/08148 A1 décrit un système d'identification électronique comprenant au moins une unité électronique (tag) notamment munie de moyens de transmission RF pour, d'une part, transmettre des données d'identification de l'unité électronique en réponse à un signal d'interrogation externe et pour, d'autre part, transmettre périodiquement un signal de positionnement (beacon signal) portant les données d'identification à une antenne de détection de direction lorsqu'aucun signal d'interrogation externe n'est reçu.

La demande internationale WO 01/03057, également au nom du présent Déposant, décrit un tel procédé de détection ainsi qu'un système de détection d'individus ou d'objets dans un espace délimité présentant une entrée.

Un mode de réalisation du système de détection décrit dans ce document est représenté à la figure 1. Il est proposé de munir chaque espace délimité, indiqué par la référence numérique 10, (par exemple défini par le compartiment 32 d'une rame de métro, d'un wagon de chemin de fer, d'un autobus, etc.) de moyens d'émission basse fréquence 4, 4*, 5, 5* placés à l'entrée 6 (en l'occurrence à chaque entrée). Ces moyens d'émission sont agencés pour transmettre, lors du passage d'un individu (indiqué par la référence numérique 8) ou d'un objet au travers de l'entrée 6, des signaux électromagnétiques basse fréquence portant des données à une unité électronique portable (indiquée par la référence numérique 36) dont est équipé l'individu 8 ou l'objet.

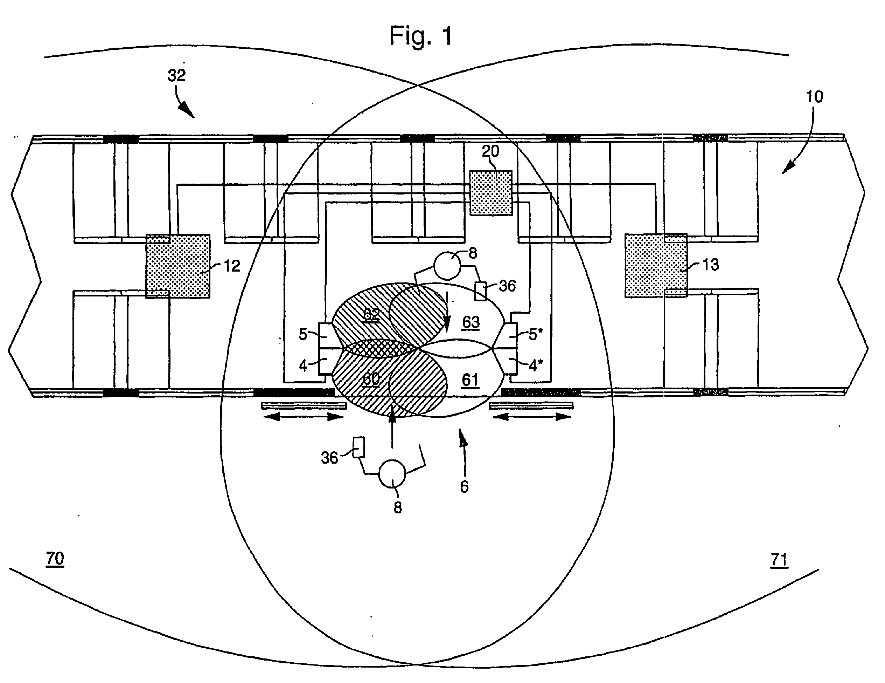

Les moyens d'émission basse fréquence 4, 4*, 5, 5* sont agencés pour émettre à relativement basse fréquence (de l'ordre d'une centaine de kHz) au moins un premier signal électromagnétique basse fréquence dans une région de communication (formée des régions de communication 60, 61, 62 et 63 dans l'illustration de la figure 1) couvrant essentiellement l'entrée 6 à l'espace délimité 10.

Le système de détection comporte en outre des moyens d'émission-réception haute fréquence 12, 13 associés à l'espace délimité 10 et permettant d'établir une communication bidirectionnelle à relativement haute fréquence (de l'ordre d'une centaine de MHz ou plus) avec les unités électroniques portables 36. Plus exactement, ces moyens d'émission-réception haute fréquence 12, 13 comprennent un ou plusieurs récepteurs haute fréquence, ici au nombre de deux, et un ou plusieurs émetteurs haute fréquence, également au nombre de deux dans cet exemple, placés dans l'espace délimité 10 de manière à ce que les régions de communication, indiquées par les références numériques 70 et 71, définies par ces émetteurs-récepteurs 12, 13 couvrent essentiellement toute la surface de l'espace délimité 10 y compris l'entrée 6. Ces régions de communication 70, 71 sont en particulier agencées pour englober les régions de communication 61, 62, 63, 64 des émetteurs basse fréquence 4, 4*, 5, 5* placés aux entrées.

Dans la figure 1, seul un espace délimité est illustré. On comprendra néanmoins que tous les espaces délimités, définis par exemple par l'ensemble des rames d'un métro ou des compartiments du moyen de transport considéré, sont équipés chacun de moyens d'émission et de réception analogues.

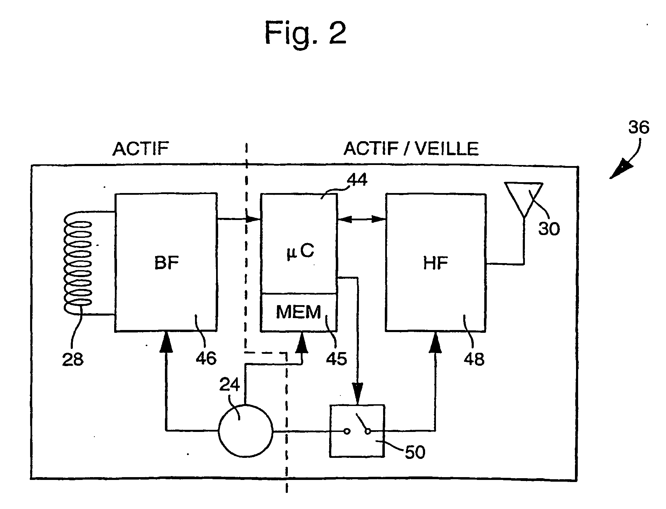

La figure 2 montre schématiquement la structure d'une unité portable 36 du système de détection de la figure 1. Cette unité électronique portable comporte un bloc de réception basse fréquence 46 et une antenne 28 pour recevoir les données transmises au moyen du ou des signaux électromagnétiques basse fréquence émis par les moyens d'émission 4, 4*, 5, 5*, ainsi qu'un bloc d'émission-réception haute fréquence 48 et une antenne 30 pour échanger des données avec les moyens d'émission-réception haute fréquence 12, 13 associés à l'espace délimité 10 au moyen d'un signal électromagnétique haute fréquence. En l'occurrence, comme on le verra en détail ci-après, un signal électromagnétique haute fréquence (désigné par la référence C dans la suite de la description) est transmis par le bloc d'émission-réception 48, et une quittance de réception (désigné par la référence ACK dans la suite de la description) est transmise par les moyens d'émission-réception 12,13 associés à l'espace délimité 10.

Une unité électronique de traitement de données 44 associée à une mémoire 45 est connectée aux blocs de réception basse fréquence 46 et d'émission-réception haute fréquence 48. L'unité électronique 36 est alimentée par une source d'alimentation en énergie électrique 24 telle une pile ou autre batterie.
Préférablement, l'unité de traitement de données 44 peut être mise en mode de veille afin d'économiser de l'énergie. De même, le bloc d'émission-réception haute fréquence 48 est susceptible d'être désactivé ou mis en veille par l'unité de traitement de données 44 comme schématisé par le moyen d'interruption 50. Ainsi, seul le bloc de réception basse fréquence 46 est alimenté en permanence ou quasi permanence, celùi-ci activant l'unité de traitement de données 44 dès lors qu'un signal électromagnétique basse fréquence émis par les moyens d'émission basse fréquence est reçu par ce bloc de réception 46.

Selon un mode de fonctionnement général décrit dans la demande internationale susmentionnée, les unités électroniques 36 sont normalement en mode de veille. En mode de veille, l'unité de traitement de données 44 ainsi que le bloc d'émission-réception haute fréquence 48 sont ainsi désactivés. Dès lors qu'une unité électronique 36 en mode de veille traverse une entrée du système, telle l'entrée 6 de la figure 1, cette unité électronique 36 est activée par les champs électromagnétiques basse fréquence émis par les moyens d'émission 4, 4*, 5, 5* et reçoit, via le ou les signaux électromagnétiques basse fréquence transmis, des données relatives à l'espace délimité en question (par exemple une identification du véhicule ou du lieu où pénètre l'individu ou l'objet, la date et l'heure, et, le cas échéant, d'autres paramètres relatifs à l'espace délimité 10). Ces données sont mémorisées dans la mémoire 45 de l'unité électronique portable 36.

Dès lors que l'unité électronique 36 a été activée et a traversé l'entrée 6, celle-ci entreprend de communiquer à haute fréquence au moyen de son bloc d'émission-réception haute fréquence 48 avec les moyens d'émission-réception 12, 13 associés à l'espace délimité. Durant cette communication haute fréquence, une identification de l'unité électronique portable 36 est notamment transmise aux moyens d'émission-réception 12, 13 de l'espace délimité 10 pour être enregistrée par un ordinateur de bord 20 associé à cet espace délimité 10 et relié aux moyens d'émission basse fréquence 4, 4*, 5, 5* ainsi qu'aux moyens d'émission-réception haute fréquence 12, 13. En réponse, les moyens d'émission-réception 12, 13 transmettent une quittance de réception à destination de l'unité électronique portable 36.

L'ordinateur de bord 20, ou plus généralement l'unité centrale de traitement, tient ainsi à jour un registre contenant les informations d'entrée et de sortie de chaque unité électronique ayant pénétré dans l'espace délimité 10. De manière similaire, chaque unité électronique portable 36 peut tenir à jour un registre des dernières entrées et sorties dans des espaces délimités, notamment l'heure, la date et une identification de chaque espace délimité considéré.

Selon un mode de fonctionnement particulier du système de détection décrit dans la demande internationale susmentionnée, chaque unité électronique portable, une fois activée par les champs électromagnétiques basse fréquence, procède à l'émission, au moins une fois, d'un signal électromagnétique haute fréquence à destination des émetteurs-récepteurs haute fréquence 12,13 en attente d'une quittance de réception provenant de ces émetteurs-récepteurs 12, 13. Typiquement, ce signal électromagnétique haute fréquence, ou signal d'interrogation de présence, est émis de manière périodique, et, dès lors que le signal haute fréquence émis par une unité électronique portable n'est plus reçu par les moyens d'émission-réception haute fréquence durant une période de temps déterminée, on admet que cette unité électronique portable ne se trouve plus à l'intérieur de l'espace délimité 10 et l'unité électronique portable 36 est alors commutée en mode de veille.

Par souci de simplification, ce premier mode de fonctionnement sera désigné dans la suite de la description par l'acronyme « BIBO » (Be In Be Out) signifiant que la présence ou l'absence d'une unité électronique 36 dans l'espace délimité est déterminée sur la base d'une réception, par les moyens d'émission-réception haute fréquence 12, 13 associés à l'espace 10, d'un signal électromagnétique haute fréquence provenant de l'unité électronique portable.

Selon une variante particulière du système de détection décrit dans la demande internationale susmentionnée, les moyens d'émission comportent des premier et second émetteurs basse fréquence, désignés respectivement par les références numériques 4, 4* et 5, 5*, comme illustré spécifiquement dans la figure 1. Ces premier et second émetteurs sont agencés pour émettre respectivement des premier et second signaux électromagnétiques basse fréquence (désignés respectivement par les références A et B dans la suite de la description) dans respectivement des première 60, 61 et seconde 62, 63 régions de communication séparées spatialement l'une de l'autre et se recouvrant partiellement. Ces première 60. 61 et seconde 62, 63 régions de communication couvrent essentiellement l'entrée 6 à l'espace délimité et sont respectivement situées vers l'extérieur et vers l'intérieur de l'espace délimité 10, de sorte que, lorsqu'un individu ou objet pénètre dans l'espace délimité 10, celui-ci rencontre tout d'abord le premier A, puis le second signal électromagnétique basse fréquence B.

Dans l'illustration de la figure 1, les premier et second émetteurs comprennent chacun une paire d'émetteurs 4 et 4*, respectivement 5 et 5*, placés de part et d'autre de l'entrée 6. On comprendra néanmoins que ces premier et second émetteurs peuvent ne comprendre, chacun, qu'un seul émetteur ou éventuellement plus de deux, l'essentiel étant que les régions de communication définies par ces émetteurs basse fréquence couvrent la zone de passage des individus ou objets par l'entrée 6 et permettent de définir une succession de régions spatialement séparées dans lesquelles sont émis des signaux distincts.

Cette disposition des premier et second émetteurs basse fréquence 4, 4* et 5, 5* et de leur champ d'émission a pour but de permettre, outre un éveil des unités électroniques portables 36, la détection du sens de passage des individus ou objets au travers de l'entrée 6. Cette détection de sens de passage est effectuée en déterminant l'ordre de réception des premier et second signaux électromagnétiques basse fréquence A, B émis respectivement par les émetteur 4, 4* dans les régions de communication 60, 61 et par les émetteurs 5, 5* dans les régions de communication 62,63.

Une réalisation d'un système de détection de passage est plus particulièrement décrite dans la demande de brevet européen EP 1 220 163 A intitulée « Système de détection du passage d'un individu ou objet par une entrée-sortie à un espace délimité » également au nom du présent Déposant.

Selon cette demande, la détection du sens de passage au travers de l'entrée 6 est notamment effectuée par l'unité électronique 36 en se basant sur l'ordre de réception des premier et second signaux électromagnétiques basse fréquence A, B émis à l'entrée. L'information concernant le sens de passage est par exemple déterminée en détectant au moins lequel des premier et second signaux électromagnétiques basse fréquence A, B a été reçu en premier et en dernier lieu durant le passage de l'individu ou de l'objet par l'entrée 6. Cette information de sens de passage, à savoir une information d'entrée, de sortie ou une information selon laquelle l'unité électronique 36 est restée à l'intérieur ou à l'extérieure de l'espace délimité est transmise par l'unité électronique 36 sous la forme d'un signal électromagnétique haute fréquence aux émetteurs-récepteurs haute fréquence 12, 13. Une fois l'information de sens de passage transmise, l'unité électronique portable 36 est alors mise en veille. Dans ce mode de fonctionnement, la quittance de réception ACK transmise par les émetteurs-récepteurs 12, 13 peut ou non être considérée par l'unité électronique 36. Préférablement, cette quittance de réception ACK est considérée par l'unité électronique afin de confirmer la réception du signal haute fréquence C.

Par souci de simplification, ce second mode de fonctionnement sera désigné dans la suite de la description par l'acronyme « WIWO » (Walk In Walk Out) signifiant que la présence ou l'absence d'une unité électronique 36 dans l'espace délimité est déterminée sur la base de l'information de sens de passage au travers l'entrée 6.

Dans une application typique du système de détection susmentionné, telle que la facturation automatique de trajets effectués par des utilisateurs au moyen de transports publics, on désirera équiper les divers véhicules du réseau de transport public d'un système de détection fonctionnant de manière aussi optimale que possible afin de détecter avec une grande fiabilité la présence ou l'absence des individus dans ces divers véhicules.

En raison de considérations pratiques notamment liées aux possibilités de montage des émetteurs basse fréquence placés aux entrées aux espaces délimités définis par les compartiments des véhicules, il est plus ou moins aisé de mettre en oeuvre le second mode de fonctionnement susmentionné dit WIWO, c'est-à-dire le mode de fonctionnement basé sur la détection du sens de passage des unités électroniques portables au travers des entrées. Toutefois, si les possibilités de montage des émetteurs basse fréquence aux entrées sont limitées ou peu adéquates pour permettre une détection fiable du sens de passage par ces entrées, le système de détection basé sur le premier mode de fonctionnement susmentionné dit BIBO est alors préférablement adopté.

On notera que le second mode de fonctionnement WIWO susmentionné est généralement préféré et adopté dans la mesure du possible puisqu'il ne requiert, dans le but d'établir la présence ou l'absence d'une unité électronique portable dans l'espace délimité, qu'une communication de courte durée entre ces unités électroniques et les émetteurs-récepteurs associés à l'espace délimité. Le premier mode de fonctionnement BIBO susmentionné nécessite typiquement des échanges périodiques entre les unités électroniques et les émetteurs-récepteurs associés à l'espace délimité afin d'établir la présence ou l'absence d'une unité électronique dans cet espace, et est donc, comparativement au second mode de fonctionnement WIWO, légèrement moins optimal du point de vue de la consommation.

Jusqu'à maintenant, étant donné que les unités électroniques portables ne sont pas à même de déterminer a priori si le système opère sur la base du premier ou du second mode de fonctionnement susmentionné, le mode de fonctionnement BIBO ou le mode de fonctionnement WIWO est adopté par défaut pour l'ensemble des espaces délimités considérés. Un compromis, par définition non optimal, est ainsi réalisé.

Un but général de la présente invention est donc de proposer une solution permettant d'adopter l'un ou l'autre des modes de fonctionnement susmentionnés, voire d'autres, selon le type ou les caractéristiques de chaque espace délimité considéré, et en particulier d'adopter le mode de fonctionnement le mieux adapté à l'espace délimité considéré, ceci afin d'accroître la fiabilité de la détection des individus ou objets dans ces espaces et également optimiser la consommation dans la mesure du possible.

Un but particulier de la présente invention est en outre de proposer une solution présentant une grande flexibilité d'utilisation permettant, le cas échéant, l'application de plusieurs modes de fonctionnement distincts pour un espace délimité considéré, ceci notamment afin de pallier à des déficiences potentielles de l'un ou l'autre des modes de fonctionnement utilisés.

La présente invention a ainsi pour objet un système de détection d'individus ou d'objets dans une pluralité d'espaces délimités présentant chacun au moins une entrée dont les caractéristiques sont énoncées dans la revendication indépendante 1.

Des modes de réalisations avantageux de la présente invention font l'objet des revendications dépendantes.

La présente invention a également pour objet des procédés de détection dont les caractéristiques sont énoncées dans les revendications 8 à 10.

Selon l'invention, le système de détection est ainsi configuré pour fonctionner dans au moins deux modes de fonctionnement distincts, tels les modes de fonctionnement WIWO et BIBO susmentionnés (voire d'autres), et le ou les signaux basse fréquence transmis par les moyens d'émission basse fréquence placés en entrée comportent à cet effet une information de sélection indiquant lequel des modes de fonctionnement doit être utilisé par les unités électroniques portables lors de leur passage par l'entrée.

De la sorte, il est possible de faire cohabiter plusieurs modes de fonctionnement distincts et ainsi adopter le mode de fonctionnement le plus adéquat et le plus optimal pour l'espace délimité considéré. La fiabilité de la détection des individus ou des objets s'en trouve ainsi améliorée.

Selon un mode de réalisation préféré de l'invention, le système est en outre configuré pour passer, au moins temporairement, d'un mode de fonctionnement à un autre pour le même espace délimité considéré, par exemple passer du second mode de fonctionnement WIWO au premier mode de fonctionnement BIBO et inversement. Il est de la sorte possible de pallier à certains problèmes pouvant potentiellement intervenir avec l'un ou l'autre des modes de fonctionnement utilisé.

Par exemple, un inconvénient du mode de fonctionnement WIWO basé sur la détection du sens de passage réside dans le fait qu'il existe une probabilité, faible, que l'unité électronique portable ne puisse pas détecter correctement le sens de passage au travers de l'entrée. En effet, compte tenu des caractéristiques physiques d'émission et de réception des signaux électromagnétiques dans l'environnement, il se peut que la séquence des signaux reçus par l'unité électronique portable ne soit pas cohérente ou suffisamment déterminante et ne permette pas d'aboutir à une conclusion sûre quant au sens de passage de cette unité électronique au travers (ou au voisinage) de l'entrée.

Bien que cette probabilité d'erreur soit relativement faible, il est désirable de rendre le système aussi robuste que possible afin d'éviter au maximum ce type d'erreurs. Une commutation du second mode de fonctionnement WIWO au premier mode de fonctionnement BIBO permet de lever une telle ambiguïté.

De même, un inconvénient du mode de fonctionnement BIBO basé sur la réception du signal électromagnétique haute fréquence réside dans le fait qu'il existe une probabilité, faible, que le signal électromagnétique d'interrogation de présence ne soit pas correctement reçu par les moyens d'émission-réception haute fréquence associés à l'espace délimité ou que la quittance de réception transmise par les moyens d'émission-réception haute fréquence associés à l'espace délimité ne soit pas correctement reçue par l'unité électronique, ceci pouvant avoir pour conséquence la mise en veille inopinée de l'unité électronique portable alors que celle-ci se trouve en réalité encore à l'intérieur de l'espace délimité.

Une commutation du premier mode de fonctionnement BIBO au second mode de fonctionnement WIWO permet de corriger une telle erreur d'interprétation.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1, déjà présentée, est une illustration schématique d'un système de détection d'individus ou d'objets;
- la figure 2, déjà présentée, montre schématiquement un mode de réalisation d'une unité électronique portable du système de la figure 1 ;
- les figure 3a et 3b illustrent l'allure, respectivement, des signaux électromagnétiques basse fréquence et haute fréquence échangés entre une unité électronique portable et les émetteurs et récepteurs associés à l'espace délimité ;
- la figure 4 est un organigramme illustrant le déroulement du processus de détection de la présence ou de l'absence d'une unité électronique selon la présente invention ; et
- les figures 5a et 5b illustrent des première et seconde variantes de réalisation avantageuses du système de détection selon la présente invention.

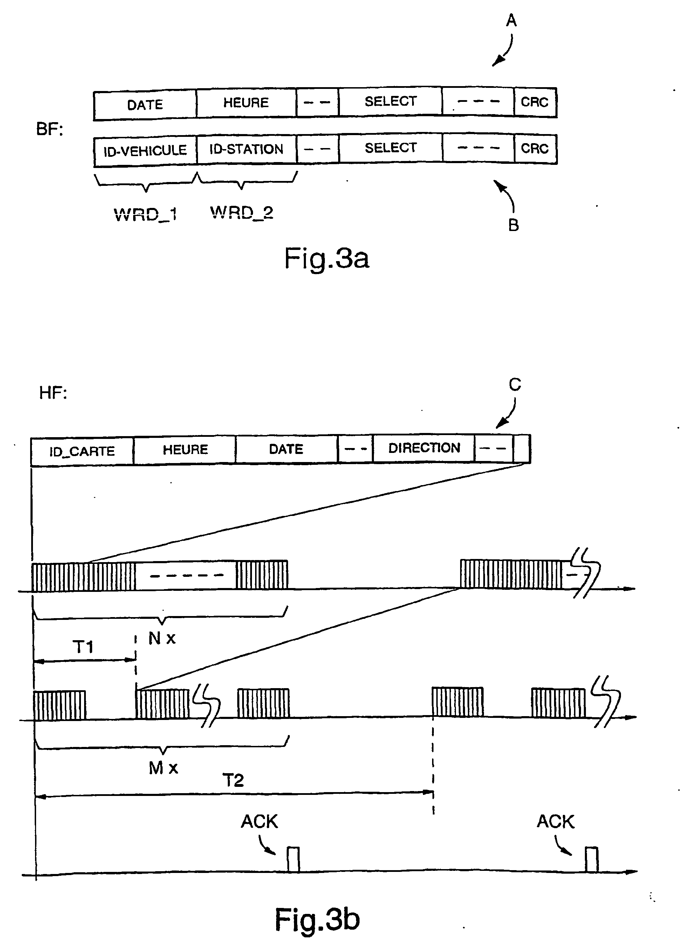

La figure 3a montre l'allure et le contenu des signaux électromagnétiques basse fréquence A, B transmis à une unité électronique portable dans le cadre spécifique d'une application à des moyens de transports publics. On insistera à nouveau sur le fait que l'invention n'est nullement limitée à cette seule application.

A titre d'exemple purement illustratif et non limitatif, les premier et second signaux électromagnétiques basse fréquence A, B comprennent chacun des données relatives à l'espace délimité auquel sont associés les émetteurs basse fréquence placés en entrée. Ainsi, les premier et second signaux électromagnétiques A, B comprennent chacun une séquence de code décomposée, de manière non limitative, en une pluralité de mots de code WRD_i, i = 1, 2, ..., et se terminant préférablement et typiquement par un mot de vérification ou CRC comme illustré schématiquement dans la figure 3a.

Le premier signal électromagnétique A peut ainsi comprendre, comme illustré, des premier et second mots indiquant respectivement la date et l'heure de passage par l'entrée à l'espace délimité où ce signal est émis. En complément, ce premier signal électromagnétique A peut comprendre, le cas échéant, d'autres mots définissant divers paramètres d'émission et/ou de réception des signaux électromagnétiques haute fréquence devant être émis et/ou reçu par l'unité électronique comme cela ressortira de la discussion de la figure 3b.

Dans l'exemple non limitatif de la figure 3a, le second signal électromagnétique basse fréquence B comporte quant à lui un ou plusieurs mots indiquant l'identité de l'espace délimité considéré (par exemple une identification du véhicule, du wagon de chemin de fer ou encore de la rame de métro, etc.), ainsi que, dans le cadre de l'application considérée ici, un ou plusieurs mots indiquant l'identité de la station ou de l'arrêt auquel est stationné le véhicule de transport public en question.

Selon l'invention, au moins l'un des premier et second signaux électromagnétiques basse fréquence A, B (préférablement les deux) comportent une information de sélection, désignée SELECT, pouvant comprendre un ou plusieurs bits d'information, indiquant lequel des modes de fonctionnement doit être utilisé par les unités électroniques lors de leur passage par l'entrée à l'espace délimité considéré.

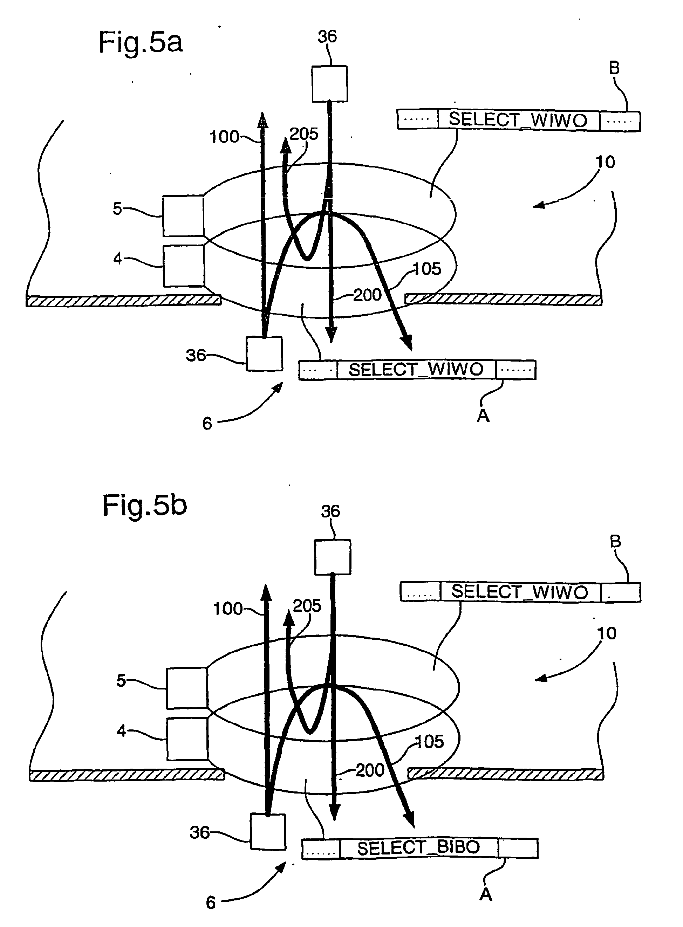

A titre d'exemple, la figure 5a illustre une première variante avantageuse du système selon la présente invention selon laquelle les premier et second signaux électromagnétiques basse fréquence A, B comportent tous deux une information de sélection déterminée, désignée SELECT_WIWO, de sorte que la présence ou l'absence d'une unité électronique 36 dans l'espace délimité 10 soit détectée selon le mode de fonctionnement WIWO.

Ainsi, selon cette variante, si l'unité électronique 36 pénètre ou sort de l'espace délimité comme illustré schématiquement par les flèches 100 et 200, respectivement, ou si cette unité électronique 36 pénètre dans les champs basse fréquence mais reste à l'extérieur ou à l'intérieur de l'espace délimité 10 comme illustré respectivement par les flèches 105 et 205, l'unité électronique portable 36 reçoit une information de sélection unique SELECT_WIWO selon laquelle elle doit opérer selon le second mode de fonctionnement WIWO et ainsi émettre, suite au passage par l'entrée 6, un signal électromagnétique haute fréquence C comprenant l'information de sens de passage détectée par l'unité électronique 36. Suite à cette transmission, l'unité électronique portable est préférablement mise en veille comme déjà mentionné.

Encore à titre d'exemple, la figure 5b illustre une seconde variante avantageuse du système selon la présente invention selon laquelle le premier signal électromagnétique basse fréquence A, émis vers l'extérieur de l'espace délimité 10, comporte une information de sélection déterminée, désignée SELECT_BIBO, de sorte que la présence ou l'absence d'une unité électronique 36 dans l'espace délimité 10 soit déterminée selon le premier mode de fonctionnement. BIBO suite à une entrée dans l'espace délimité. Le second signal électromagnétique B émis vers l'intérieur de l'espace délimité 10 comporte quant à lui une information de sélection déterminée, désignée SELECT_WIWO, de sorte que l'unité électronique portable 36 opère, si celle-ci se trouve en mode de veille, selon le second mode de fonctionnement WIWO.

Selon cette seconde variante, une unité électronique portable 36 opère normalement selon le premier mode de fonctionnement BIBO, c'est-à-dire procède à l'émission du signal électromagnétique haute fréquence C en attente d'une quittance de réception ACK de la part des moyens d'émission-réception haute fréquence (12, 13 dans la figure 1) associés à l'espace délimité 10. Selon cette variante, l'unité électronique portable 36 n'opère selon le second mode de fonctionnement WIWO que si celle-ci est entrée en mode de veille alors qu'elle se trouve en réalité encore à l'intérieur de l'espace délimité 10 et traverse ultérieurement les champs des émetteurs basse fréquence placés à l'entrée 6.

On rappellera que, selon le mode de fonctionnement BIBO, une unité électronique portable n'est normalement mise en veille que si celle-ci se trouve effectivement en dehors du champ d'émission et de réception des moyens d'émission-réception haute fréquence associés à l'espace délimité et ne reçoit en conséquence plus de quittance de réception ACK. Dans des conditions normales, lorsque une unité électronique portable active sort de l'espace délimité 10 (dans la direction de la flèche 200) ou pénètre temporairement dans les champs basse fréquence mais reste à l'intérieur de l'espace délimité 10 (dans la direction de la flèche 205), l'information de sélection transmise par le second signal électromagnétique B n'est ainsi pas considérée.

On comprendra ainsi que la variante de réalisation de la figure 5b permet d'effectuer une correction éventuelle du registre d'entrée-sortie tenu par l'ordinateur de bord 20 et, le cas échéant, des données mémorisées par l'unité électronique portable 36, dans le cas où cette unité électronique aurait été mise en veille de manière inopinée.

La figure 3b montre l'allure et le contenu du signal électromagnétique haute fréquence C transmis par une unité électronique portable ainsi que la quittance de réception ACK transmise par les moyens d'émission-réception haute fréquence associés à l'espace délimité.

A titre d'exemple, le signal électromagnétique haute fréquence C transmis par l'unité électronique portable 36 comporte notamment un numéro d'identification ID de l'unité électronique, des informations concernant la date et l'heure de passage par l'entrée ainsi que, le cas échéant, l'information de détection de sens de passage, désignée DIRECTION, si le système opère selon le mode de fonctionnement WIWO.

Comme illustré dans la figure 3b, une séquence formée de N répétitions des données susmentionnées est préférablement transmise à plusieurs reprises (par exemple avec un maximum M de répétitions) avec une période de répétition T1. La transmission du signal haute fréquence C est préférablement effectuée de la sorte afin d'assurer une certaine redondance.

Si l'unité électronique portable 36 opère selon le mode de fonctionnement BIBO, l'émission des séquences susmentionnées est en outre répétée périodiquement avec une période de répétition T2.

Les périodes de répétition T1 et T2 susmentionnées ainsi que, le cas échéant, les paramètres de répétition N et M sont préférablement transmis au moyen des signaux électromagnétiques basse fréquence A et/ou B. On notera que ces paramètres sont adaptés selon les caractéristiques de l'espace délimité considéré et peuvent, le cas échéant, être adaptés au cours du temps, par exemple en fonction de la durée entre deux arrêts successifs du véhicule de transport

Comme illustré dans la figure 3b, les moyens d'émission-réception haute fréquence associés à l'espace délimité procèdent à l'émission d'une quittance de réception ACK (à la fois dans les premier et second modes de fonctionnement BIBO et WIWO) dès lors que le signal électromagnétique haute fréquence C a pu être reçu correctement.

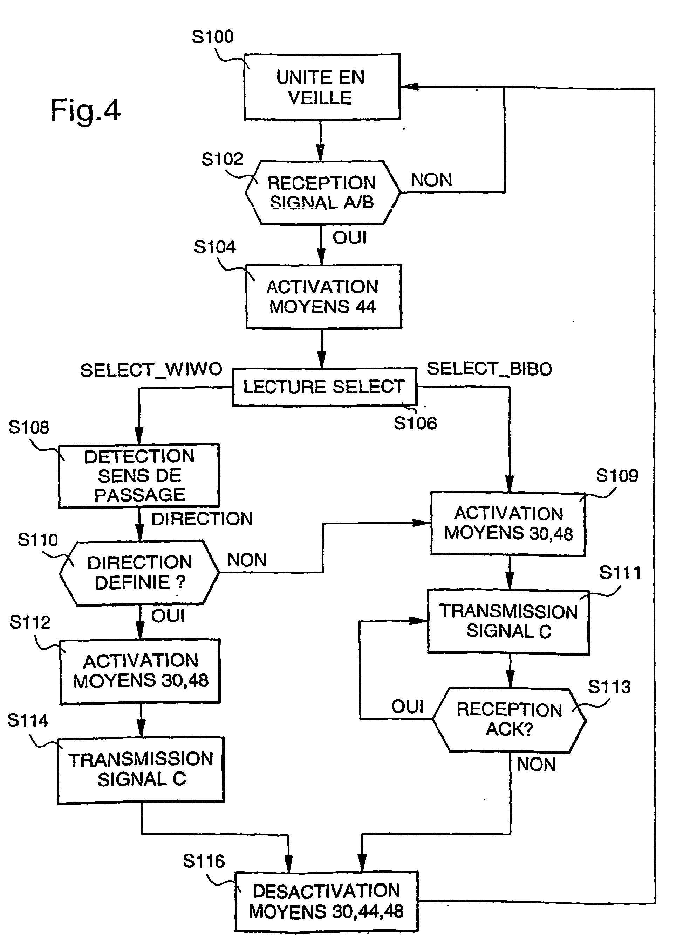

La figure 4 montre un organigramme illustrant le déroulement du processus de détection de la présence ou de l'absence d'une unité électronique selon la présente invention.

Le processus de détection débute à l'étape S100 avec une unité électronique en mode de veille. Aussitôt que l'unité électronique portable capte l'un des deux signaux électromagnétiques basse fréquence A, B (étape S102), les moyens de traitement de données 44 de l'unité électronique sont activés (étape S104) et ceux-ci procèdent à la lecture et l'identification de l'information de sélection SELECT contenue dans le premier signal électromagnétique reçu (étape S106), à savoir le premier A ou le deuxième signal électromagnétique basse fréquence B.

Si cette information de sélection SELECT correspond à l'information de sélection déterminée SELECT_WIWO indiquant que l'unité électronique doit opérer selon le mode de fonctionnement WIWO, l'unité électronique procède tout d'abord à la détection du sens de passage DIRECTION (étape S108), puis à l'activation du bloc de réception haute fréquence 30, 48 (étape S112) et enfin à la transmission du signal électromagnétique haute fréquence C contenant l'information de sens de passage DIRECTION (étape S114).

Si l'information de sélection SELECT correspond à l'information de sélection déterminée SELECT_BIBO indiquant que l'unité électronique doit opérer selon le mode de fonctionnement BIBO, l'unité électronique procède tout d'abord à l'activation du bloc de réception haute fréquence 30, 48 (étape S109), puis la transmission du signal électromagnétique haute fréquence C (étape S111), et la vérification de la réception de la quittance de réception ACK (étape S113), cette dernière étape étant répétée tant que cette quittance de réception ACK est reçue.

Dès lors que le signal électromagnétique haute fréquence C comprenant l'information de sens de passage DIRECTION a été transmise à l'étape S114 (dans le mode de fonctionnement WIWO) ou qu'aucune quittance de réception ACK n'est reçue à l'étape S113 (dans le mode de fonctionnement BIBO), les moyens de traitement de données 44 ainsi que le bloc d'émission-réception haute fréquence 30, 48 de l'unité électronique sont désactivés (étape S116) et celle-ci passe alors à nouveau en mode de veille et le processus de détection peut à nouveau recommencer à l'étape S100.

Dans le mode de fonctionnement WIWO, la détection du sens de passage est par exemple effectuée par l'unité électronique portable en se basant sur l'ordre de réception des premier et second signaux électromagnétiques basse fréquence A, B émis à l'entrée, par exemple en détectant au moins lequel des premier et second signaux électromagnétiques basse fréquence A, B a été reçu en premier et en dernier lieu durant le passage de l'individu ou de l'objet par l'entrée 6. A titre d'exemple uniquement, il est possible de constituer une table de vérité comprenant au moins les identifications des premier et dernier signaux basse fréquence reçus. Le tableau ci-dessous montre à titre d'exemple une table de vérité formée des identifications des premier, avant-dernier et dernier signaux basse fréquence reçus ainsi que l'interprétation résultante du sens de passage.

| | Premier signal reçu | Avant-dernier signal reçu | Dernier signal reçu | Conclusion |
|---|---|---|---|---|
| 1 | A | A | A | resté à l'extérieur |
| 2 | A | A | B | entrée |
| 3 | A | B | A | état indéfini |
| 4 | A | B | B | entrée |
| 5 | B | A | A | sortie |
| 6 | B | A | B | état indéfini |
| 7 | B | B | A | sortie |
| 8 | B | B | B | resté à l'intérieur |

Dans le tableau ci-dessus, on admet que les états 3 et 6 ne permettent pas de conclure à une entrée, une sortie, ou au fait que l'unité électronique portable est restée à l'intérieur ou à l'extérieur de l'espace délimité. On a par contre admis que les états 2 et 7 correspondent respectivement à une entrée et une sortie d'une unité électronique. On comprendra bien évidemment que ces états pourraient également être considérés comme des états non définis.

Dans l'éventualité où l'information de sens de passage n'est pas concluante et ne permet pas d'affirmer si l'unité électronique portable est entrée, sortie, ou restée à l'intérieur ou à l'extérieur de l'espace délimité (à titre d'exemple si la séquence de signaux détecté correspond aux états 3 et 6 indiqués dans le tableau ci-dessus), la commutation du système dans le mode de fonctionnement BIBO permettra avantageusement de lever cette ambiguïté. Ce processus est illustré dans la figure 4 par l'étape S110 où, si une telle ambiguïté dans le sens de passage est détectée, le processus se poursuit par l'étape S109 d'activation du bloc d'émission-réception 30, 48 suivie par les étapes S111 et S113.

En se référant à nouveau à la variante illustrée dans la figure 5b, on constatera que si l'unité électronique est passée de manière inopinée en mode de veille alors qu'elle se trouve en réalité encore à l'intérieur de l'espace délimité 10, cette unité entreprendra successivement les étapes du processus de détection selon le mode de fonctionnement WIWO déjà décrit, permettant de la sorte la correction des registres d'entrée-sortie.

Dans l'un ou l'autre des cas susmentionnés où l'unité électronique portable est commutée d'un mode de fonctionnement à un autre, il conviendra d'inclure, dans le signal électromagnétique haute fréquence C transmis par l'unité électronique, une information indiquant que celle-ci a procédé à cette commutation, c'est-à-dire une information analogue à l'information de sélection SELECT transmise par le ou les signaux électromagnétiques basse fréquence d'entrée.

On comprendra que diverses modifications et/ou améliorations évidentes pour l'homme du métier peuvent être apportées aux divers modes de réalisation décrits dans la présente description sans sortir du cadre de l'invention défini par les revendications annexées.

Ainsi, dans la figure 1, les moyens d'émission basse fréquence 4, 4*, 5, 5* sont illustrés comme étant disposés dans le compartiment 32 du véhicule. D'une manière générale, il suffit que ces moyens d'émission basse fréquence soient associés à l'espace délimité considéré, c'est-à-dire qu'ils transmettent notamment des informations relatives à cet espace délimité. On peut par exemple concevoir que les émetteurs du premier signal électromagnétique basse fréquence A qui se trouvent vers l'extérieur de l'espace délimité ne soient pas disposés à l'intérieur du compartiment du véhicule mais soient disposés de manière fixe sur le quai ou l'arrêt où montent et descendent les passagers. De même, les moyens d'émission-réception haute fréquence peuvent également être disposés en dehors du compartiment du véhicule, par exemple dans des couloirs d'accès aux quais ou directement sur ces quais.

## Revendications

1. Système de détection d'individus (8) ou d'objets dans une pluralité d'espaces délimités (10) présentant chacun au moins une entrée (6), ce système de détection comprenant, pour chacun desdits espaces délimités:
- des moyens d'émission basse fréquence (4, 4*, 5, 5*) associés à l'espace délimité (10) et placés à ladite entrée (6) pour émettre au moins un signal électromagnétique basse fréquence (A, B) dans une région de communication (61, 62, 63, 64) couvrant essentiellement ladite entrée (6) ; et
- des moyens d'émission-réception (12, 13) haute fréquence associés à l'espace délimité (10) pour recevoir et émettre au moins un signal électromagnétique haute fréquence (C, ACK),
ce système de détection comprenant en outre :
- des cartes ou unités électroniques portables (36) équipant chacune un individu (8) ou objet, chaque unité électronique (36) comportant un bloc de réception basse fréquence (28. 46) pour recevoir ledit signal électromagnétique basse fréquence (A, B), et un bloc d'émission-réception haute fréquence (30, 48) pour émettre et recevoir ledit signal électromagnétique haute fréquence (C, ACK) ; et
- au moins une unité centrale de traitement (20) associée aux dits espaces délimités (10) et reliée aux dits moyens d'émission basse fréquence (4, 4*, 5. 5*) ainsi qu'aux dits moyens d'émission-réception haute fréquence (12, 13) pour enregistrer des données relatives à l'entrée et la sortie desdites unités électroniques portables (36),
**caractérisé en ce que** le système est configuré pour fonctionner dans au moins deux modes de fonctionnement distincts (BIBO, WIWO) selon lesquels les unités électroniques (36) communiquent avec lesdits moyens d'émission-réception haute fréquence (12, 13) et **en ce que** ledit signal électromagnétique basse fréquence (A, B) comporte une information de sélection (SELECT, SELECT_BIBO, SELECT_WIWO) indiquant lequel desdits au moins deux modes de fonctionnement (BIBO, WIWO) doit être utilisé par lesdites unités électroniques (36) lors de leur passage par une entrée (6) de l'un quelconque de ladite pluralité d'espaces délimités (10).

2. Système selon la revendication 1, **caractérisé en ce qu'**il est configuré pour passer, au moins temporairement, d'un mode de fonctionnement à un autre dans au moins un espace délimité sélectionné (10) parmi ladite pluralité d'espaces délimités.

3. Système selon la revendication 1 ou 2, **caractérisé en ce que** lesdits moyens d'émission basse fréquence comportent des premier (4, 4*) et second (5, 5*) émetteurs basse fréquence pour émettre respectivement des premier (A) et second (B) signaux électromagnétiques basse fréquence portant des données relatives à l'espace délimité (10), ces premier et second signaux électromagnétiques basse fréquence (A, B) étant respectivement émis dans des première (60, 61) et seconde (62, 63) régions de communication séparées spatialement l'une de l'autre et se recouvrant au moins partiellement, lesdites première et seconde régions de communication (60, 61, 62, 63) étant respectivement situées vers l'extérieur et vers l'intérieur dudit espace délimité (10),
**en ce que** chaque unité électronique (36) comporte des moyens de détection pour déterminer le sens de passage (DIRECTION) de ladite unité électronique (36) au travers de ladite entrée (6) en fonction de la réception desdits premier et second signaux électromagnétiques basse fréquence (A, B),
**en ce que** le système est configuré pour fonctionner dans un premier mode de fonctionnement (BIBO) selon lequel chaque unité électronique (36) procède à l'émission, au moins une fois, dudit signal électromagnétique haute fréquence (C), la présence ou l'absence d'une unité électronique (36) dans l'espace délimité (10) étant déterminée sur la base d'une réception, par lesdits moyens d'émission-réception haute fréquence (12, 13), du signal électromagnétique haute fréquence (C) provenant de cette unité électronique (36),
et **en ce que** le système est configuré pour fonctionner dans un second mode de fonctionnement (WIWO) selon lequel chaque unité électronique (36) procède à la détection dudit sens de passage (DIRECTION) et transmet, au moyen dudit signal électromagnétique haute fréquence (C), une information relative au dit sens de passage (DIRECTION), la présence ou l'absence d'une unité électronique (36) dans ledit espace délimité (10) étant déterminée sur la base de ladite information de sens de passage (DIRECTION).

4. Système selon la revendication 3 configuré pour passer, au moins temporairement, d'un mode de fonctionnement à un autre dans au moins un espace délimité sélectionné (10) parmi ladite pluralité d'espaces délimités, **caractérisé en ce que** ledit premier et/ou second signal électromagnétique basse fréquence (A, B) comporte une information de sélection (SELECT_WIWO) déterminée de sorte que la présence ou l'absence d'une unité électronique (36) dans cet espace délimité sélectionné (10) est déterminée selon ledit second mode de fonctionnement (WIWO),
et **en ce que** le système est commuté, au moins temporairement, dans cet espace délimité sélectionné (10), dans ledit premier mode de fonctionnement (BIBO) si l'information de sens de passage (DIRECTION) déterminée par l'unité électronique (36) n'est pas concluante.

5. Système selon la revendication 3 configuré pour passer, au moins temporairement, d'un mode de fonctionnement à un autre dans au moins un espace délimité sélectionné (10) parmi ladite pluralité d'espaces délimités, **caractérisé en ce que** ledit premier signal électromagnétique basse fréquence (A) comporte une information de sélection (SELECT_BIBO) déterminée de sorte que, suite à une entrée d'une unité électronique (36) dans ledit espace délimité sélectionné (10), la présence ou l'absence de cette unité électronique (36) dans ledit espace délimité (10) est déterminée selon ledit premier mode de fonctionnement (BIBO),
et **en ce que** ledit second signal électromagnétique basse fréquence (B) comporte une information de sélection (SELECT_WIWO) déterminée de sorte que, lors d'une sortie d'une unité électronique de l'espace délimité sélectionné (10), le système est commuté, au moins temporairement, dans ledit second mode de fonctionnement (WIWO) dans le cas où le système a préalablement conclu à l'absence d'une unité électronique (36) alors que celle-ci se trouve toujours dans ledit espace délimité sélectionné (10).

6. Système selon l'une quelconque des revendications précédentes, **caractérisé en ce que** lesdits premier et/ou second signaux électromagnétiques basse fréquence (A, B) portent des données comportant une indication permettant d'identifier ledit espace délimité (10) ainsi qu'une indication de l'heure et de la date du passage de l'unité électronique (36) par ladite entrée (6).

7. Système selon l'une quelconque des revendications précédentes, **caractérisé en ce que** ledit espace délimité (10) est défini par un compartiment (32) d'un véhicule de transport, tel un autobus, un wagon de chemin de fer ou une rame de métro, et **en ce que** lesdits premier et/ou second signaux électromagnétiques basse fréquence (A, B) portent des données comportant une indication de la station ou de l'arrêt où se trouve ledit véhicule de transport.

8. Procédé de détection d'un individu (8) ou d'un objet dans un système de détection selon l'une quelconque des revendications 3 à 5, **caractérisé en ce que** chaque unité électronique (36) comporte en outre :
- des moyens de traitement de données (44) pour traiter des données provenant dudit bloc de réception basse fréquence (28, 46) et/ou des données provenant de ou destinées au dit bloc d'émission-réception haute fréquence (30, 48) ; et
- une source d'alimentation en énergie électrique (24) pour alimenter lesdits moyens de traitement (44) ainsi que ledit bloc de réception basse fréquence (28, 46) et ledit bloc d'émission-réception haute fréquence (30, 48),
**en ce que** ledit bloc de réception basse fréquence (28, 46) est alimenté en permanence ou quasi-permanence,
et **en ce que** lesdits moyens de traitement de données (44) ainsi que ledit bloc d'émission-réception haute fréquence (30, 48) sont désactivés dans un mode dit de veille de ladite unité électronique (36),
lesdits moyens de traitement de données (44) étant activés par ledit bloc de réception basse fréquence (28, 46) dès lors que celui-ci détecte l'un ou l'autre desdits premier et second signaux électromagnétiques basse fréquence (A, B),
ledit bloc d'émission-réception haute fréquence (30, 48) étant activé dès lors que l'unité électronique (36) doit émettre et/ou recevoir ledit signal électromagnétique haute fréquence (C, ACK),
ce procédé comportant les étapes suivantes :
a) réception par une carte ou unité électronique (36) portée par ledit individu (8) ou objet, desdits premier et/ou second signaux électromagnétiques basse fréquence (A, B) au moyen dudit bloc de réception basse fréquence (28, 46) de l'unité électronique (36) ;
b) activation desdits moyens de traitement de données (44) de l'unité électronique (36) ;
c) lecture de ladite information de sélection (SELECT) contenue dans le premier signal électromagnétique basse fréquence reçu, à savoir ledit premier ou second signal électromagnétique basse fréquence (A, B), et identification du mode de fonctionnement associé à l'espace délimité (10) ;
d) si ledit mode de fonctionnement correspond au second (WIWO) desdits modes de fonctionnement, détection, par ladite unité électronique (36), dudit sens de passage (DIRECTION) au travers de l'entrée (6) ;
e) activation dudit bloc d'émission-réception haute fréquence (30, 48) de l'unité électronique (36) ; et
f) si ledit mode de fonctionnement correspond au second (WIWO) desdits modes de fonctionnement, transmission, après le passage par ladite entrée (6), dudit signal électromagnétique haute fréquence (C) comportant ladite information de sens de passage (DIRECTION) au moyen dudit bloc d'émission-réception haute fréquence (30, 48),
sinon, transmission, au moins une première fois, dudit signal électromagnétique haute fréquence (C) au moyen dudit bloc d'émission-réception haute fréquence (30, 48) en attente d'une quittance de réception (ACK) provenant desdits moyens d'émission-réception haute fréquence (12, 13) ; et
g) si ledit mode de fonctionnement correspond au second (WIWO) desdits modes de fonctionnement, retour de l'unité électronique (36) dans son mode de veille et désactivation desdits moyens de traitement de données (44) et dudit bloc d'émission-réception haute fréquence (30, 48), et
si ledit mode de fonctionnement correspond au premier (BIBO) desdits modes de fonctionnement, retour de l'unité électronique (36) dans son mode de veille et désactivation desdits moyens de traitement de données (44) et dudit bloc d'émission-réception haute fréquence (30, 48) si aucune quittance de réception (ACK) n'est reçue durant une période de temps déterminée, sinon répétition de la transmission dudit signal électromagnétique haute fréquence (C) jusqu'à ce qu'aucune quittance de réception (ACK) ne soit reçue durant ladite période de temps déterminée.

9. Procédé de détection selon la revendication 8 dans un système de détection selon la revendication 4, **caractérisé en ce que**, si ladite information de sens de passage (DIRECTION) déterminée par l'unité électronique (36) à l'étape d) n'est pas concluante et ne permet pas de déterminer de manière univoque si l'unité électronique (36) se trouve à l'intérieur ou à l'extérieur dudit espace délimité (10), ladite unité électronique (36) est alors commutée au moins temporairement dans ledit premier mode de fonctionnement (BIBO).

10. Procédé de détection selon la revendication 8, dans un système de détection selon la revendication 5, **caractérisé en ce que**, si ladite unité électronique (36) est en mode de veille et si le premier signal électromagnétique basse fréquence reçu par ledit bloc de réception basse fréquence (28, 46) à l'étape c) correspond au dit second signal électromagnétique basse fréquence (B), ladite unité électronique (36) est alors commutée au moins temporairement dans ledit second mode de fonctionnement (WIWO).

## Claims

1. System for detecting individuals (8) or objects in a plurality of delimited spaces (10) each having at least one entrance (6), the detection system comprising, for each of the said delimited spaces :
- low frequency transmission means (4, 4*, 5, 5*) associated with the delimited space (10) and located at the said entrance (6) to transmit at least one low frequency electromagnetic signal (A, B) in a communication region (61, 62, 63, 64) substantially covering the said entrance (6); and
- high frequency transmission-reception means (12, 13) associated with the delimited space (10) for receiving and transmitting at least one high frequency electromagnetic signal (C, ACK),
the detection system further comprising:
- cards or portable electronic units (36), each equipping an individual (8) or object, each electronic unit (36) comprising a low frequency reception module (28, 46) for receiving the said low frequency electromagnetic signal (A, B) and a high frequency transmission-reception module (30, 48) for transmitting and receiving the said high frequency electromagnetic signal (C, ACK); and
- at least one central processing unit (20) associated with the said delimited spaces (10) and connected to the said low frequency transmission means (4, 4*, 5, 5*) as well as to the said high frequency transmission-reception means (12, 13) for recording data relative to the entrance and exit of the said portable electronic units (36),
**characterized in that** the system is configured to operate according to at least two distinct modes of operation (BIBO, WIWO) in which said electronic units communicate with said high-frequency transmission-reception means (12, 13), and **in that** the said low frequency electromagnetic signal (A, B) comprises selection information (SELECT, SELECT_BIBO, SELECT_WIWO) indicating which of the said at least two modes of operation (BIBO, WIWO) should be utilised by the said electronic units (36) during their passage through an entrance (6) of any one of the said plurality of delimited spaces (10).

2. System according to claim 1, **characterized in that** it is configured to pass, at least temporarily, from one mode of operation to another in at least one selected delimited space (10) among the said plurality of delimited spaces.

3. System according to claim 1 or 2, **characterized in that** the said low frequency transmission means comprise first (4, 4*) and second (5, 5*) low frequency transmitters for transmitting first (A) and second (B) low frequency electromagnetic signals respectively carrying data relating to the delimited space (10), these first and second low frequency electromagnetic signals (A, B) being respectively transmitted in first (60, 61) and second (62, 63) communication regions, spatially separated from one another and at least partially overlapping, the said first and second communication regions (60, 61, 62, 63) being situated respectively towards the outside and towards the inside of the said delimited space (10),
**in that** each electronic unit (36) comprises detection means for determining the direction of passage (DIRECTION) of the said electronic unit (36) through the said entrance (6) as a function of the reception of the said first and second low frequency electromagnetic signals (A, B),
**in that** the system is configured to operate according to a first mode of operation (BIBO) according to which each electronic unit (36) proceeds to transmit, at least once, the said high frequency electromagnetic signal (C), the presence or absence of an electronic unit (36) in the delimited space (10) being determined on the basis of reception, by the said high frequency transmission-reception means (12, 13), of the high frequency electromagnetic signal (C) emanating from this electronic unit (36),
and **in that** the system is configured to function according to a second mode of operation (WIWO) according to which each electronic unit (36) proceeds to detect the said direction of passage (DIRECTION) and transmits, by means of the said high frequency electromagnetic signal (C), information relative to the said direction of passage (DIRECTION), the presence or absence of an electronic unit (36) in the said delimited space (10) being determined on the basis of the said information of the direction of passage (DIRECTION).

4. System according to claim 3, configured to pass, at least temporarily, from one mode of operation to another in at least one selected delimited space (10) among the said plurality of delimited spaces, **characterized in that** the said first and/or second low frequency electromagnetic signal (A, B) comprises selection information (SELECT_WIWO) determined such that the presence or absence of an electronic unit (36) in this selected delimited space (10) is determined according to the said second mode of operation (WIWO),
and **in that** the system is switched, at least temporarily, in this selected delimited space (10), into the said first mode of operation (BIBO) if the information of direction of passage (DIRECTION) determined by the electronic unit (36) is not conclusive.

5. System according to claim 3, configured to pass, at least temporarily, from one mode of operation to another in at least one selected delimited space (10) among the said plurality of delimited spaces, **characterized in that** the said first low frequency electromagnetic signal (A) comprises selection information (SELECT_BIBO) determined such that, following an entry of an electronic unit (36) into the said selected delimited space (10), the presence or absence of this electronic unit (36) in the said delimited space (10) is determined according to the said first mode of operation (BIBO),
and **in that** the said second low frequency electromagnetic signal (B) comprises selection information (SELECT_WIWO) determined such that, when an electronic unit leaves the selected delimited space (10), the system is switched at least temporarily into the said second mode of operation (WIWO) in case the system has previously concluded the absence of an electronic unit (36) although this unit is still located in the said selected delimited space (10).

6. System according to any one of the preceding claims, **characterized in that** the said first and/or second low frequency electromagnetic signals (A, B) carry data comprising an indication allowing identification of the said delimited space (10) as well as an indication of the time and the date of the passage of the electronic unit (36) through the said entrance (6).

7. System according to any one of the preceding claims, **characterized in that** the said delimited space (10) is defined by a compartment (32) of a transport vehicle, such as a bus, a railway carriage or a subway train, and **in that** the said first and/or second low frequency electromagnetic signals (A, B) carry data comprising an indication of the station or the stop where the said transport vehicle is located.

8. Method of detecting an individual (8) or an object in a detection system according to any one of claims 3 to 5, **characterized in that** each electronic unit (36) further comprises:
- data processing means (44) for processing data provided by the said low frequency reception module (28, 46) and/or data provided by or destined to the said high frequency transmission-reception module (30, 48);
- an electrical power supply source (24) for supplying the said processing means (44) as well as the said low frequency reception module (28, 46) and the said high frequency transmission-reception module (30, 48),
**in that** the said low frequency reception module (28, 46) is supplied permanently or quasi-permanently,
and **in that** the said data processing means (44) as well as the said high frequency transmission-reception module (30, 48) are deactivated in a so-called standby mode of the said electronic unit (36),
the said data processing means (44) being activated by the said low frequency reception module (28, 46) when this detects one or the other of the said first and second low frequency electromagnetic signals (A, B),
the said high frequency transmission-reception module (30, 48) being activated when the electronic unit (36) has to transmit and/or receive the said high frequency electromagnetic signal (C, ACK),
this method comprising the following steps:
a) reception by a card or electronic unit (36) carried by the said individual (8) or object of the said first and/or second low frequency electromagnetic signal (A, B) by means of the said low frequency reception module (28, 46) of the electronic unit (36);
b) activation of the said data processing means (44) of the electronic unit (36);
c) reading the said selection information (SELECT) contained in the first received low frequency electromagnetic signal, namely the said first or second low frequency electromagnetic signal (A, B), and identification of the mode of operation associated with the delimited space (10);
d) if the said mode of operation corresponds to the second (WIWO) of the said modes of operation, detection by the said electronic unit (36) of the said direction of passage (DIRECTION) through the entrance (6);
e) activation of the said high frequency transmission-reception module (30, 48) of the electronic unit (36); and
f) if the said mode of operation corresponds to the second (WIWO) of the said modes of operation, transmission, after the passage through the said entrance (6), of the said high frequency electromagnetic signal (C) comprising the said information of direction of passage (DIRECTION) by means of the said high frequency transmission-reception module (30, 48),
otherwise transmission, at least once, of the said high frequency electromagnetic signal (C) by means of the said high frequency transmission-reception module (30, 48) awaiting a reception acknowledgement (ACK) provided by the said high frequency transmission-reception means (12, 13); and
g) if the said mode of operation corresponds to the second (WIWO) of the said modes of operation, return of the electronic unit (36) into its standby mode and deactivation of the said data processing means (44) and of the said high frequency transmission-reception module (30, 48), and
if the said mode of operation corresponds to the first (BIBO) of the said modes of operation, return of the electronic unit (36) to its standby mode and deactivation of the said data processing means (44) and of the said high frequency transmission-reception module (30, 48) if no reception acknowledgement (ACK) is received during a predetermined period of time, otherwise repetition of the transmission of the said high frequency electromagnetic signal (C) until no acknowledgement of reception (ACK) is received during the said predetermined period of time.

9. Method of detection according to claim 8 in a detection system according to claim 4, **characterized in that**, if the said information of direction of passage (DIRECTION) determined by the electronic unit (36) in step d) is not conclusive and it is not possible to determine in an unequivocal manner whether the electronic unit (36) is located inside or outside the said delimited space (10), the said electronic unit (36) is then switched at least temporarily into the said first mode of operation (BIBO).

10. Method of detection according to claim 8, in a detection system according to claim 5, **characterized in that**, if the said electronic unit (36) is in standby mode and if the first low frequency electromagnetic signal received by the said low frequency reception module (28, 46) in step c) corresponds to the said second low frequency electromagnetic signal (B), the said electronic unit (36) is then switched at least temporarily into the said second mode of operation (WIWO).

## Patentansprüche

1. System für die Erfassung von Personen (8) oder Objekten in mehreren begrenzten Räumen (10), die jeweils wenigstens einen Eingang (6) aufweisen, wobei dieses Erfassungssystem für jeden dieser begrenzten Räume umfasst:
- Niederfrequenz-Sendemittel (4, 4*, 5, 5*), die dem begrenzten Raum (10) zugeordnet und an dem Eingang (6) angeordnet sind, um wenigstens ein niederfrequentes elektromagnetisches Signal (A, B) in eine Kommunikationszone (61, 62, 63, 64), die den Eingang (6) im Wesentlichen abdeckt, auszusenden; und
- Hochfrequenz-Sende/Empfangsmittel (12, 13), die dem begrenzten Raum (10) zugeordnet sind, um wenigstens ein hochfrequentes elektromagnetisches Signal (C, ACK) zu empfangen und auszusenden,
wobei dieses Erfassungssystem außerdem umfasst:
- tragbare elektronische Karten oder Einheiten (36), mit denen jeweils eine Person (8) oder ein Objekt ausgerüstet ist, wobei jede elektronische Einheit (36) einen Niederfrequenz-Empfangsblock (28, 46), um das niederfrequente elektromagnetische Signal (A, B) zu empfangen, und einen Hochfrequenz-Sende/Empfangsblock (30, 40), um das hochfrequente elektromagnetische Signal (C, ACK) auszusenden und zu empfangen, aufweist; und
- wenigstens eine Zentraleinheit (20), die den begrenzten Räumen (10) zugeordnet und mit den Niederfrequenz-Sendemitteln (4, 4*, 5, 5*) sowie mit den Hochfrequenz-Sende/Empfangsmitteln (12, 13) verbunden ist, um Daten, die mit dem Eintreten und dem Verlassen der tragbaren elektronischen Einheiten (36) in Beziehung stehen, aufzuzeichnen,
**dadurch gekennzeichnet, dass** das System so konfiguriert ist, dass es in wenigstens zwei verschiedenen Betriebsarten (BIBO, WIWO) arbeitet, gemäß denen die elektronischen Einheiten (36) mit den Hochfrequenz-Sende/Empfangsmitteln (12, 13) kommunizieren, und dass das niederfrequente elektromagnetische Signal (A, B) Auswahlinformationen (SELECT, SELECT _BIBO, SELECT_WIWO) umfasst, die angeben, welche der wenigstens zwei Betriebsarten (BIBO, WIWO) von den elektronischen Einheiten (36) bei ihrem Durchgang durch einen Eingang (6) irgendeines der mehreren begrenzten Räume (10) verwendet werden soll.

2. System nach Anspruch 1, **dadurch gekennzeichnet, dass** es so konfiguriert ist, dass es wenigstens vorübergehend von einer Betriebsart in eine andere wenigstens in einen ausgewählten begrenzten Raum (10) unter den mehreren begrenzten Räumen übergeht.

3. System nach Anspruch 1 oder 2, **dadurch gekennzeichnet, dass** die Niederfrequenz-Sendemittel einen ersten (4, 4*) und einen zweiten (5, 5*) Niederfrequenz-Sender umfassen, um erste (A) bzw. zweite (B) niederfrequente elektromagnetische Signale auszusenden, die Daten tragen, die auf den begrenzten Raum (10) bezogen sind, wobei diese ersten und zweiten niederfrequenten elektromagnetischen Signale (A, B) in erste (60, 61) bzw. zweite (62, 63) Kommunikationszonen ausgesendet werden, die räumlich voneinander getrennt sind und sich wenigstens teilweise überdecken, wobei sich die ersten und zweiten Kommunikationszonen (60, 61, 62, 63) jeweils in Richtung zur äußeren Umgebung bzw. zum Innenraum des begrenzten Raums (10) befinden,
dass jede elektronische Einheit (36) Erfassungsmittel umfasst, um die Durchgangsrichtung (DIRECTION) der elektronischen Einheit (36) durch den Eingang (6) in Abhängigkeit vom Empfang des ersten und des zweiten niederfreqeunten elektromagnetischen Signals (A, B) zu bestimmen,
dass das System so konfiguriert ist, dass es in einer ersten Betriebsart (BIBO) arbeitet, gemäß der jede elektronische Einheit (36) wenigstens einmal das hochfrequente elektromagnetische Signal (C) aussendet, wobei das Vorhandensein oder Fehlen einer elektronischen Einheit (36) in dem begrenzten Raum (10) anhand eines Empfangs durch die Hochfrequenz-Sende/Empfangsmittel (12, 13) des hochfrequenten elektromagnetischen Signals (C), das von dieser elektronischen Einheit (36) ausgeht, bestimmt wird,
und dass das System so konfiguriert ist, dass es in einer zweiten Betriebsart (WIWO) arbeitet, gemäß der jede elektronische Einheit (36) die Durchgangsrichtung (DIRECTION) erfasst und mittels des hochfrequenten elektromagnetischen Signals (C) Informationen bezüglich der Durchgangsrichtung (DIRECTION) sendet, wobei das Vorhandensein oder Fehlen einer elektronischen Einheit (36) in dem begrenzten Raum (10) anhand der Informationen bezüglich der Durchgangsrichtung (DIRECTION) bestimmt wird.

4. System nach Anspruch 3, das so konfiguriert ist, dass es wenigstens in einem ausgewählten begrenzten Raum (10) unter den mehreren begrenzten Räumen wenigstens vorübergehend von einer Betriebsart in eine andere übergeht, **dadurch gekennzeichnet, dass** das erste und/oder das zweite niederfrequente elektromagnetische Signal (A, B) bestimmte Auswahlinformationen (SELECT_WIWO) enthalten, derart, dass das Vorhandensein oder Fehlen einer elektronischen Einheit (36) in diesem ausgewählten begrenzten Raum (10) gemäß dieser zweiten Betriebsart (WIWO) bestimmt wird,
und dass das System wenigstens vorübergehend in diesem ausgewählten begrenzten Raum (10) in die erste Betriebsart (BIBO) umgeschaltet wird, falls die Informationen bezüglich der Durchgangsrichtung (DIRECTION), die durch die elektronische Einheit (36) bestimmt wird, nicht schlüssig sind.

5. System nach Anspruch 3, das so konfiguriert ist, dass es in wenigstens einem ausgewählten begrenzten Raum (10) unter den mehreren begrenzten Räumen wenigstens vorübergehend von einer Betriebsart in eine andere übergeht, **dadurch gekennzeichnet, dass** das erste niederfrequente elektromagnetische Signal (A) bestimmte Auswahlinformationen (SELECT_BIBO) enthält, derart, dass infolge des Eintritts einer elektronischen Einheit (36) in den ausgewählten begrenzten Raum (10) das Vorhandensein oder Fehlen dieser elektronischen Einheit (36) in diesem begrenzten Raum (10) gemäß der ersten Betriebsart (BIBO) bestimmt wird,
und dass das zweite niederfrequente elektromagnetische Signal (B) bestimmte Auswahlinformationen (SELECT_WIWO) enthält, derart, dass das System bei einem Austritt einer elektronischen Einheit aus dem ausgewählten begrenzten Raum (10) wenigstens vorübergehend in die zweite Betriebsart (WIWO) umgeschaltet wird, falls das System vorher auf das Fehlen einer elektronischen Einheit (36) geschlossen hat, obwohl sich diese ständig in dem ausgewählten begrenzten Raum (10) befindet.

6. System nach einem der vorhergehenden Ansprüche, **dadurch gekennzeichnet, dass** das erste und/oder das zweite niederfrequente elektromagnetische Signal (A, B) Daten tragen, die einen Hinweis enthalten, der ermöglicht, den begrenzten Raum (10) zu identifizieren, sowie eine Zeitangabe und das Datum des Durchgangs der elektronischen Einheit (36) durch den Eingang (6) enthalten.

7. System nach einem der vorhergehenden Ansprüche, **dadurch gekennzeichnet, dass** der begrenzte Raum (10) durch eine Kabine (32) eines Transportfahrzeugs wie etwa eines Autobusses, eines Eisenbahnwagens oder eines U-Bahn-Zugs definiert ist und dass das erste und/oder das zweite niederfrequente elektromagnetische Signal (A, B) Daten tragen, die einen Hinweis auf die Station oder den Halt, an der bzw. dem sich das Transportfahrzeug befindet, enthalten.

8. Verfahren zum Erfassen einer Person (8) oder eines Objekts in einem Erfassungssystem nach einem der Ansprüche 3 bis 5, **dadurch gekennzeichnet, dass** jede elektronische Einheit (36) außerdem umfasst:
- Datenverarbeitungsmittel (44), um Daten, die von dem Niederfrequenz-Empfangsblock (28, 46) stammen, und/oder Daten, die von dem Hochfrequenz-Sende/Empfangs-Block (30, 48) stammen oder für ihn bestimmt sind, zu verarbeiten; und
- eine Quelle (24) für die Versorgung mit elektrischer Energie, um die Verarbeitungsmittel (44) sowie den Niederfrequenz-Empfangsblock (28, 46) und den Hochfrequenz-Sende/Empfangsblock (30, 48) zu versorgen,
dass der Niederfrequenz-Empfangsblock (28, 46) ständig oder nahezu ständig versorgt wird,
und dass die Datenverarbeitungsmittel (44) sowie der Hochfrequenz-Sende/Empfangsblock (30, 48) in einer so genannten Ruhebetriebsart der elektronischen Einheit (36) deaktiviert sind,
wobei die Datenverarbeitungsmittel (44) durch den Niederfrequenz-Empfangsblock (28, 46) aktiviert werden, sobald dieser das eine oder das andere der ersten und zweiten niederfrequenten elektromagnetischen Signale (A, B) erfasst,
wobei der Hochfrequenz-Sende/Empfangsblock (30, 48) aktiviert wird, sobald die elektronische Einheit (36) das hochfrequente elektromagnetische Signal (C, ACK) aussenden und/oder empfangen soll,
wobei dieses Verfahren die folgenden Schritte umfasst:
a) Empfangen der ersten und/oder zweiten niederfrequenten elektromagnetischen Signale (A, B) durch eine von der Person (8) oder dem Objekt getragene Karte oder elektronische Einheit (36) mittels des Niederfrequenz-Empfangsblocks (28, 46) der elektronischen Einheit (36);
b) Aktivieren der Datenverarbeitungsmittel (44) der elektronischen Einheit (36);
c) Lesen der Auswahlinformationen (SELECT), die in dem empfangenen ersten niederfrequenten elektromagnetischen Signal, d. h. in dem ersten oder dem zweiten niederfrequenten elektromagnetischen Signal (A, B), enthalten sind, und Identifizieren der dem begrenzten Raum (10) zugeordneten Betriebsart;
d) falls die Betriebsart der zweiten (WIWO) der Betriebsarten entspricht, Erfassen der Durchgangsrichtung (DIRECTION) durch den Eingang (6) mittels der elektronischen Einheit (36);
e) Aktivieren des Hochfrequenz-Sende/Empfangsblocks (30, 48) der elektronischen Einheit (36); und
f) falls die Betriebsart der zweiten (WIWO) der Betriebsarten entspricht, Senden des hochfrequenten elektromagnetischen Signals (C), das die Informationen über die Durchgangsrichtung (DIRECTION) enthält, nach dem Durchgang durch den Eingang (6) mittels des Hochfrequenz-Sende/Empfangsblocks (30, 48),
andernfalls wenigstens einmaliges Senden des hochfrequenten elektromagnetischen Signals (C) mittels des Hochfrequenz-Sende/Empfangsblocks (30, 48) und Warten auf eine Empfangsquittierung (ACK), die von den Hochfrequenz-Sende/Empfangs-Mitteln (12, 13) stammt; und
g) falls die Betriebsart der zweiten (WIWO) der Betriebsarten entspricht, Zurücksetzen der elektronischen Einheit (36) in ihre Ruhebetriebsart und Deaktivieren der Datenverarbeitungsmittel (44) und des Hochfrequenz-Sende/Empfangsblocks (30, 48), und
falls die Betriebsart der ersten (BIBO) der Betriebsarten entspricht, Zurücksetzen der elektronischen Einheit (36) in ihre Ruhebetriebsart und Deaktivieren der Datenverarbeitungsmittel (44) und des Hochfrequenz-Sende/Empfangsblocks (30, 48), falls während einer bestimmten Zeitdauer keine Empfangsquittierung (ACK) empfangen wird, andernfalls Wiederholen des Sendens des hochfrequenten elektromagnetischen Signals (C) solange, bis feststeht, dass während der bestimmten Zeitdauer keine Empfangsquittierung (ACK) empfangen wird.

9. Erfassungsverfahren nach Anspruch 8 in einem Erfassungssystem nach Anspruch 4, **dadurch gekennzeichnet, dass** dann, wenn die Informationen bezüglich der Durchgangsrichtung (DIRECTION), die von der elektronischen Einheit (36) im Schritt d) bestimmt werden, nicht schlüssig sind und keine eindeutige Bestimmung zulassen, ob sich die elektronische Einheit (36) innerhalb oder außerhalb des begrenzten Raums (10) befindet, die elektronische Einheit (36) dann wenigstens vorübergehend in die erste Betriebsart (BIBO) umgeschaltet wird.

10. Erfassungsverfahren nach Anspruch 9 in einem Erfassungssystem nach Anspruch 5, **dadurch gekennzeichnet, dass** dann, wenn sich die elektronische Einheit (36) in der Ruhebetriebsart befindet und wenn das von dem Niederfrequenz-Empfangsblock (28, 46) im Schritt c) empfangene erste niederfrequente elektromagnetische Signal dem zweiten niederfrequenten elektromagnetischen Signal (B) entspricht, die elektronische Einheit (36) dann wenigstens vorübergehend in die zweite Betriebsart (WIWO) umgeschaltet wird.
